# EUROPEAN PATENT APPLICATION

(11) **EP 4 679 538 A1**
(43) Date of publication of application: **14.01.2026**
(21) Application number: 25177843.7
(22) Date of filing: 21.05.2025
(51) Int. Cl.: H01M 4/66, H01M 10/04, H01M 10/0585, H01M 50/536, H01M 50/54

(54) **SECONDARY BATTERY AND METHOD FOR MANUFACTURING THE SAME**

(30) Priority: 08.07.2024 KR 20240089572
(71) Applicant: SAMSUNG SDI CO., LTD., Yongin-si, Gyeonggi-do 17084 (KR)
(72) Inventor: CHOI, Kyugil, 17084 Yongin-si, Gyeonggi-do (KR); KIM, Gwanghun, 17084 Yongin-Si, Gyeonggi-do (KR)
(74) Representative: Gulde & Partner

(57) **Abstract**

Disclosed is a secondary battery (100) and a method (800) for manufacturing the same. The secondary battery (100) includes an electrode assembly including a plurality of electrode plates, and a plurality of conductors (320, 420, 520, 720) joined to the electrode assembly, in which each of the plurality of electrode plates includes a portion with an active material (220) on both sides of a composite substrate (210), and a non-coated portion (310, 410, 510, 710) free of the active material (220), and where one end of each of the plurality of conductors (320, 420, 520, 720) is arranged between two adjacent non-coated portions (310, 410, 510, 710) of the plurality of electrode plates.

## Description

### BACKGROUND

### 1. Field

Aspects of the present invention relate to a secondary battery and method for manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

It may be desirable to reduce the weight of secondary batteries used in portable information technology (IT) devices, cars, or the like. In order to reduce the weight of secondary batteries, some existing technologies have been developed to thin the materials used in secondary batteries, such as substrates, separators, and outer materials, or to increase energy density by improving the physical properties of active materials. However, some of these developments may result in reducing the safety of secondary batteries.

The above information disclosed in this Background section is for enhancement of understanding of the background of the present disclosure, and therefore, it may contain information that does not constitute related (or prior) art.

### SUMMARY

Aspects of the present invention provide a secondary battery and method for manufacturing the same.

These and other aspects and features of the present disclosure will be described in or will be apparent from the following description of embodiments of the present disclosure.

According to an aspect of the present invention, there is provided a secondary battery including an electrode assembly including a plurality of electrode plates, and a plurality of conductors joined to the electrode assembly. Each of the plurality of electrode plates includes a portion with an active material on both sides of a composite substrate, and a non-coated portion free of the active material. One end of each of the plurality of conductors is arranged between two adjacent non-coated portions of the plurality of electrode plates. Hence, using a composite material may reduce the weight of the secondary battery.

According to an embodiment of the present disclosure, the composite substrate may include a polymer substrate, a first metal layer and a second metal layer. The first and the second metal layers may be arranged on both sides of the polymer substrate. The first metal layer and the second metal layer may be made from a same material. An advantage of this embodiment may be that both sides of the composite substrate are conductive, facilitating integrating the composite substrate in a stacked electrode assembly.

According to an embodiment of the present disclosure, the secondary battery may further include at least one fixing member. The at least one fixing member may fixe the non-coated portions of the plurality of electrode plates and a plurality of conductors. An advantage of this embodiment may be that undesired movements of the electrode plates relative to the conductors may be reduced or even prevented.

According to an embodiment of the present disclosure, the at least one fixing member may be in contact and for example in electrically conductive contact with at least a portion of the plurality of conductors. An advantage of this embodiment may be that the fixing member can facilitate electrically contacting the conductors to each other.

According to an embodiment of the present disclosure, the at least one fixing member may be arranged between the respective non-coated portions of the plurality of electrode plates and the plurality of conductors. An advantage of this embodiment may be that the at least one fixing member does not affect the portions coated with the active material.

According to an embodiment, the at least one fixing member may be made from or even consist of a conductive material. An advantage of this embodiment may be that conductivity of the at least one fixing member may be improved, e.g. compared to a fixing member that merely comprises a conductive material.

According to an embodiment of the present disclosure, the at least one fixing member may include an adhesive. An advantage of this embodiment may be that mechanical stabilization of the electrode assembly is further improved.

According to an embodiment of the present disclosure, the at least one fixing member may be configured to penetrate the non-coated portions of respectively the plurality of electrode plates and/or the plurality of conductors. An advantage of this embodiment may be that movements of the electrode plates and the conductors relative to the at least one fixing member are further hindered, thereby further improving the mechanical stabilization of the electrode assembly.

According to an embodiment of the present disclosure, the at least one fixing member may include a rivet. An advantage of this embodiment may be that a rivet is easy to mount, requires very little additional space and fulfills the mechanical and electrical requirements mentioned above.

According to an embodiment of the present disclosure, a second end of each of the plurality of conductors may extend outward from the non-coated portion of each of the plurality of electrode plates. An advantage of this embodiment may be that the conductors can be connected easily.

According to an embodiment of the present disclosure, the second end of each of the plurality of conductors may be joined to a lead tab. An advantage of this embodiment may be that it is easier to connect a further element, e.g. a terminal of the secondary battery, to a lead tab than to a plurality of conductors.

According to another aspect of the present invention, there is provided a method for manufacturing a secondary battery. The method includes forming an electrode assembly by stacking a plurality of electrode plates; and joining a plurality of conductors to the electrode assembly, wherein each of the plurality of electrode plates includes a portion in which an active material is applied to both sides of a composite substrate, and a non-coated portion free of the active material. One end of each of the plurality of conductors is arranged between two adjacent non-coated portions of the plurality of electrode plates. Hence, using a composite material may reduce the weight of the secondary battery.

According to one embodiment of the present disclosure, the composite substrate includes a polymer substrate, a first metal layer and a second metal layer. The first and second metal layers may be arranged on both sides of the polymer substrate. The first metal layer and the second metal layer may be made from a same material. An advantage of this embodiment may be that both sides of the composite substrate are conductive, facilitating integrating the composite substrate in a stacked electrode assembly.

According to an embodiment of the present disclosure, the joining may include fixing the non-coated portions of respectively the plurality of electrode plates and the plurality of conductors by using at least one fixing member. An advantage of this embodiment may be that undesired movements of the electrode plates relative to the conductors may be reduced or even prevented.

According to an embodiment of the present disclosure, the at least one fixing member may be arranged between the respective non-coated portions of the plurality of electrode plates and the plurality of conductors. An advantage of this embodiment may be that the at least one fixing member does not affect the portions coated with the active material.

According to an embodiment of the present disclosure, that at least one fixing member may be made from or even consist of a conductive material. An advantage of this embodiment may be that conductivity of the at least one fixing member may be improved, e.g. compared to a fixing member that merely comprises a conductive material.

According to an embodiment of the present disclosure, the at least one fixing member may penetrate the respective non-coated portions of the plurality of electrode plates and the plurality of conductors. An advantage of this embodiment may be that movements of the electrode plates and the conductors relative to the at least one fixing member are further hindered, thereby further improving the mechanical stabilization of the electrode assembly.

According to an embodiment of the present disclosure, the at least one fixing member may include a rivet. An advantage of this embodiment may be that a rivet is easy to mount, requires very little additional space and fulfills the mechanical and electrical requirements mentioned above.

According to an embodiment of the present disclosure, the method may further include joining a second end of each of the plurality of conductors extended outward from the non-coated portion of each of the plurality of electrode plates to the lead tab. An advantage of this embodiment may be that the conductors can be connected easily.

According to an embodiment of the present disclosure, the joining to the lead tab includes collecting the second ends of the respectively plurality of conductors, and cutting boundaries of other ends of the respective plurality of conductors to match each other. An advantage of this embodiment may be that the risk of forming unintended electrical connections is reduced while reducing space required.

According to some embodiments of the present disclosure, since the composite substrate includes a polymer substrate inside of it, the weight of the composite substrate may be reduced, and the energy density of the secondary battery including the composite substrate may be improved.

According to some embodiments of the present disclosure, the plurality of non-coated portions and the plurality of conductors may be electrically connected to each other and fixed (e.g., firmly fixed) by using the at least one fixing member.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a diagram of an example secondary battery according to an embodiment of the present disclosure.
FIG. 2 is a diagram of an example composite substrate according to an embodiment of the present disclosure.
FIG. 3 depicts a plurality of non-coated portions of a plurality of electrode plates coupled to a lead tab according to an embodiment of the present disclosure.
FIG. 4 depicts another plurality of non-coated portions coupled to a lead tab according to an embodiment of the present disclosure.
FIG. 5 is a cross-sectional view of a fixing member joined to a plurality of non-coated portions and a plurality of conductors according to an embodiment of the present disclosure.
FIG. 6 is a plan view of the fixing member of FIG. 5 joined to the plurality of non-coated portions and the plurality of conductors according to an embodiment of the present disclosure.
FIG. 7 is a diagram of a plurality of fixing members joined to a plurality of non-coated portions 710_1 to 710_N and a plurality of conductors according to an embodiment of the present disclosure.
FIG. 8 is a flowchart of an example method for manufacturing a secondary battery according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In this disclosure, the sizes and relative sizes of layers and regions illustrated in the drawings may be exaggerated for clarity of explanation. That is, the sizes shown in the schematic drawings are only for convenience of understanding and are not limited thereto. In addition, identical reference numerals throughout the specification refer to identical components.

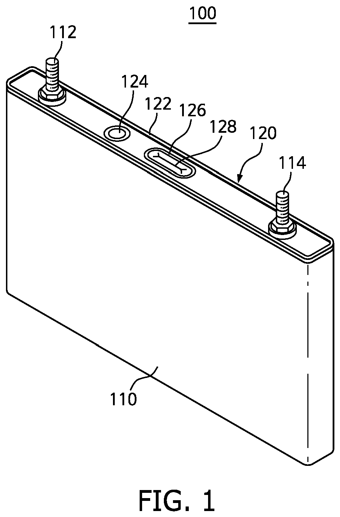

FIG. 1 is a diagram of an example secondary battery 100 according to an embodiment of the present disclosure in a perspective view. Referring to FIG. 1, the secondary battery 100 according to one or more embodiments of the present disclosure may include at least one electrode assembly wound with a separator as an insulator between a positive electrode and a negative electrode, a case 110 in which the electrode assembly is received (or accommodated) therein, and a cap assembly 120 coupled to an opening of the case 110.

The secondary battery 100 according to one or more embodiments will now be described as an example of a prismatic lithium ion secondary battery. However, the present disclosure is not limited thereto, and suitable aspects, features and principles described herein may be applied to various other types of batteries, such as lithium polymer batteries and/or cylindrical batteries.

Each of the positive electrode and the negative electrode may include a current collector made of a thin metal foil having a coated portion on which an active material is coated and an uncoated portion on which an active material is not coated.

The positive electrode and the negative electrode are wound after interposing the separator, which is an insulator, therebetween. However, the present disclosure is not limited thereto, and the electrode assembly may have a structure in which a positive electrode and a negative electrode, each made of a plurality of sheets, are alternately stacked with a separator interposed therebetween.

The case 110 may form the overall outer appearance of the secondary battery 100 and may be made of a conductive metal, such as aluminum, aluminum alloy, or nickel-plated steel. In addition, the case 110 may provide a space in which the electrode assembly is accommodated.

The cap assembly 120 may include a cap plate 122 covering an opening in the case 110, and the case 110 and the cap plate 122 may be made of a conductive material. The positive and negative electrode terminals 112 and 114 electrically connected to the positive electrode and the negative electrode, respectively, may be installed to penetrate (or extend through) the cap plate 122 and protrude outwardly therethrough.

In addition, outer peripheral surfaces (e.g., circumferential surfaces) of upper pillars of the positive and negative electrode terminals 112 and 114 protruding outwardly from the cap plate 122 may be threaded and may be fixed to the cap plate 122 by utilizing nuts.

However, the present disclosure is not limited thereto, and the positive and negative electrode terminals 112 and 114 may have a rivet structure and may be riveted or welded to the cap plate 122.

In addition, the cap plate 122 may be made of a thin plate and may be coupled to the opening in the case 110, and an electrolyte injection port into which a sealing stopper 124 may be installed may be located (e.g., formed) in the cap plate 122, and a vent portion 126 having a notch 128 may be installed.

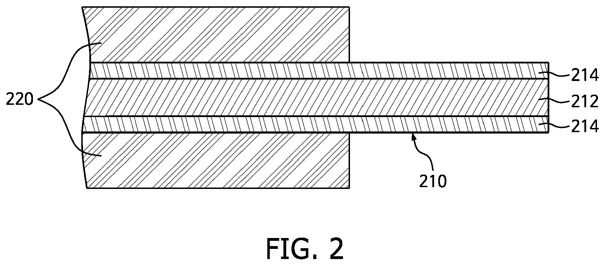

In an embodiment, the secondary battery 100 may include an electrode assembly including a plurality of stacked electrode plates and a plurality of conductors joined to the electrode assembly. In some embodiments, one or more (e.g., each) of the plurality of electrode plates may include a mixed portion in which an active material is applied to one or more (e.g., both) sides of the composite substrate, and a non-coated portion in which no active material is applied to the composite substrate (e.g., free of the active material). Examples of the composite substrate will be described in detail with reference to FIG. 2.

In an embodiment of the present disclosure, one end of one or more (e.g., each) of the plurality of conductors may be placed or disposed between two adjacent non-coated portions of the plurality of electrode plates. In some embodiments, the other ends of the plurality of conductors may extend outward (i.e., toward the external space of the electrode plates) from the non-coated portions of the plurality of electrode plates. In some embodiments, the respective other ends of the plurality of conductors may be joined to the lead tab. In some embodiments, the electrode assembly may be coupled to the positive and negative electrode terminals 112, 114.

FIG. 2 is a diagram of an example composite substrate 210 according to an embodiment of the present disclosure in a cross-sectional view. In an embodiment of the present disclosure, the electrode plate (for example, the electrode plate described with respect to FIG. 1) may include a mixed portion in which an active material 220 is applied to both sides of the composite substrate 210, and a non-coated portion in which no active material is applied to the composite substrate 210. In some embodiments, the composite substrate 210 may include a polymer substrate 212 and metal layers 214 arranged or disposed on both sides of the polymer substrate 212. The polymer substrate 212 may be sandwiched between the metal layers 214. In some embodiments, one or more (e.g., each) of the metal layers 214 arranged or disposed on both sides of the polymer substrate 212 may be made from the same material. For example, the polymer substrate 212 may include a synthetic material like a plastic material, e.g. polyethylene terephthalate (PET). The metal layers 214 may include or consist of an electrically conductive metal or metal alloy including aluminum (Al) or copper (Cu), but is not limited thereto.

In an embodiment of the present disclosure, the metal layers 214 arranged or disposed on both sides of the polymer substrate 212 may include or consist of aluminum (Al) or an alloy comprising aluminum (Al). In this embodiment, an active material 220 arranged or disposed on the metal layers 214 may be a positive electrode active material, and the electrode plate may function as a positive electrode plate. In some embodiments, the metal layers 214, arranged or disposed on both sides of the polymer substrate 212, may include or consist of copper (Cu) or an alloy comprising copper (Cu). In this embodiment, the active material 220 arranged or disposed on the metal layers 214 may be a negative electrode active material, and the electrode plate may function as a negative electrode plate.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a rechargeable lithium battery may include a current collector and a positive electrode active material layer on the current collector. The positive electrode active material layer may include a positive electrode active material and may further include a binder and/or a conductive material(e.g., an electrically conductive material).

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The current collector may be aluminum (Al) but is not limited thereto.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof).

The silicon-carbon composite may be a composite of silicon and amorphous carbon. According to an embodiment, the silicon-carbon composite may be in a form of silicon particles and amorphous carbon coated on the surface of the silicon particles.

The silicon-carbon composite may further include crystalline carbon. For example, the silicon-carbon composite may include a core including crystalline carbon and silicon particles and an amorphous carbon coating layer on a surface of the core.

In some embodiments, since the composite substrate includes a polymer substrate inside of it, or in an interior portion of the composite substrate, the weight of the composite substrate may be reduced, which may improve the energy density of the secondary battery including the composite substrate.

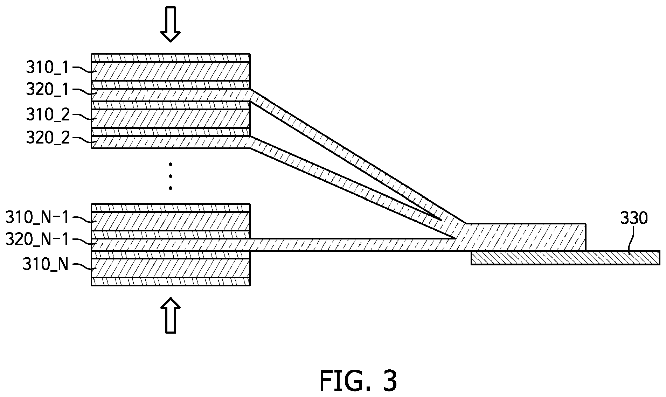

FIG. 3 depicts a plurality of non-coated portions 310_1 to 310_N of a plurality of electrode plates coupled to a lead tab 330 according to an embodiment of the present disclosure in a cross-sectional view. In an embodiment, an electrode assembly including a plurality of stacked electrode plates may be electrically connected to the lead tab 330. In some embodiments, one or more (e.g., each) of the plurality of electrode plates may include a mixed portion in which an active material is applied to both sides of the composite substrate, and a non-coated portion in which no active material is applied to the composite substrate. In some embodiments, the composite substrate may include a polymer substrate and a metal layer arranged or disposed on both sides of the polymer substrate.

In an embodiment, a plurality of conductors 320_1 to 320_N-1 may be joined to the electrode assembly to couple the electrode assembly to the lead tab 330. In some embodiments, one end of one or more (e.g., each) of the plurality of conductors 320_1 to 320_N-1 may be arranged or disposed between two adjacent non-coated portions of the plurality of electrode plates. For example, a first conductor 320_1 may be arranged or disposed between the adjacent first non-coated portion 310_1 and second non-coated portion 310_2. In some embodiments, the metal layers of the plurality of non-coated portions 310_1 to 310_N coupled by the plurality of conductors 320_1 to 320_N-1 may be identical to each other. In some embodiments, the other ends of the plurality of conductors 320_1 to 320_N-1 may extend outward (i.e., toward an external space of the electrode plates) from the non-coated portions 310_1 to 310_N of the plurality of electrode plates and be joined to the lead tab 330. In this embodiment, the other end of one or more (e.g., each) of the plurality of conductors 320_1 to 320_N-1 may be joined to the lead tab 330 by laser welding, ultrasonic welding, etc., but is not limited thereto.

In an embodiment of the present disclosure, one end of one or more (e.g., each) of the plurality of non-coated portions 310_1 to 310_N and one end of one or more (e.g., each) of the plurality of conductors 320_1 to 320_N-1 arranged or disposed between the plurality of non-coated portions 310_1 to 310_N may be compressed. In some embodiments, one end of one or more (e.g., each) of the plurality of conductors 320_1 to 320_N-1 and the plurality of non-coated portions 310_1 to 310_N may be compressed with each other.

In an embodiment of the present disclosure, the lengths of the plurality of conductors 320_1 to 320_N-1 that are coupled to the lead tab 330 may vary depending on the position of the lead tab 330 compared to the conductors 320. For example, since one end of the N-1-th conductor 320_N-1 is closest to the lead tab 330, the length of the N-1-th conductor 320_N-1 that is coupled to the lead tab 330 may be shortest. When the plurality of conductors 320_1 to 320_N-1 of the same length are used, the lengths of the other ends of the plurality of conductors 320_1 to 320_N-1 joined to the lead tab 330 may vary. This means that the boundaries of the other ends of the plurality of conductors 320_1 to 320_N-1 that are joined on the lead tab 330 may not match. In some embodiments, the boundaries of the respective other ends of the plurality of conductors 320_1 to 320_N-1 may be cut and processed to match each other.

The embodiment of FIG. 3 shows that the lead tab 330 is at the location closest to the one end of the N-1-th conductor 320_N-1, but is not limited to this, and the position of the lead tab 330 may be changed as necessary.

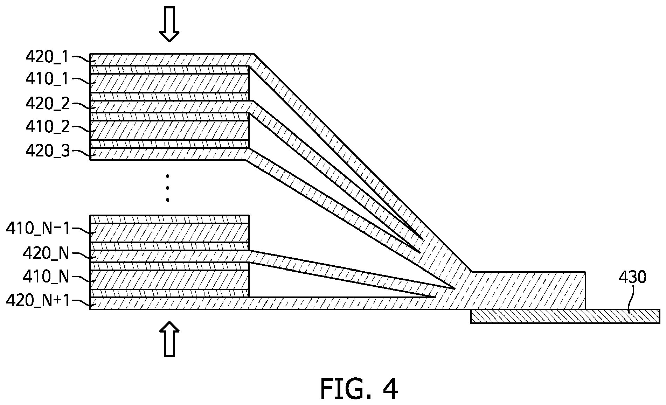

FIG. 4 depicts another plurality of non-coated portions 410_1 to 410_N of a plurality of electrode plates coupled to a lead tab 430 according to an embodiment of the present disclosure in a cross-sectional view. In an embodiment, an electrode assembly including a plurality of stacked electrode plates may be electrically connected to the lead tab 430. In some embodiments, one or more (e.g., each) of the plurality of electrode plates may include a mixed portion in which an active material is applied to both sides of the composite substrate, and a non-coated portion in which no active material is applied to the composite substrate. In some embodiments, the composite substrate may include a polymer substrate and a metal layer arranged or disposed on both sides of the polymer substrate.

In an embodiment, a plurality of conductors 420_1 to 420_N-1 may be joined to an electrode assembly to couple the electrode assembly to the lead tab 430. In some embodiments, one end of one or more (e.g., each) of the plurality of conductors 420_1 to 420_N-1 may be arranged or disposed between two adjacent non-coated portions, above the uppermost non-coated portion, and below the lowermost non-coated portion of the plurality of electrode plates. For example, a first conductor 420_1 is arranged or disposed above a first non-coated portion 410_1 located at the top of the plurality of electrode plates, a second conductor 420_2 is arranged or disposed between the adjacent first non-coated portion 410_1 and a second non-coated portion 410_2, and a N+1-the conductor 420_N+1 is arranged or disposed below a N-th non-coated portion 410_N located at the bottom. In some embodiments, the metal layers of the plurality of non-coated portions 410_1 to 410_N coupled by the plurality of conductors 420_1 to 420_N-1 may be identical to each other. In some embodiments, the other ends of the plurality of conductors 420_1 to 420_N+1 may extend outward (i.e., toward an external space of the electrode plates) from the non-coated portions 410_1 to 410_N of the plurality of electrode plates and be joined to the lead tab 430. In this embodiment, the other end of one or more (e.g., each) of the plurality of conductors 420_1 to 420_N+1 may be joined to the lead tab 430 by laser welding, ultrasonic welding, etc., but is not limited thereto.

In an embodiment of the present disclosure, one end of one or more (e.g., each) of the plurality of non-coated portions 410_1 to 410_N and one end of one or more (e.g., each) of the plurality of conductors 420_1 to 420_N+1 may be compressed. In some embodiments, one end of one or more (e.g., each) of the plurality of conductors 420_1 to 420_N+1 and the plurality of non-coated portions 410_1 to 410_N may be compressed with each other.

In an embodiment of the present disclosure, the lengths of the plurality of conductors 420_1 to 420_N+1 that are coupled to the lead tab 430 may vary depending on the position of the lead tab 430. For example, since one end of a N+1-th conductor 420_N+1 is closest to the lead tab 430, the length of the N+1-th conductor 420_N+1 that is coupled to the lead tab 430 may be shortest. When the plurality of conductors 420_1 to 420_N+1 of the same length are used, the lengths of the other ends of the plurality of conductors 420_1 to 420_N+1 joined to the lead tab 430 may vary. This means that the boundaries of the conductors 420_1 to 420_N+1 that are joined on the lead tab 430 may not match. In some embodiments, the boundaries of the respective other ends of the plurality of conductors 420_1 to 420_N+1 may be cut and processed to match each other.

The embodiment of FIG. 4 shows that the lead tab 430 is at the location closest to the one end of the N+1-th conductor 420_N+1, but is not limited to this, and the position of the lead tab 430 may be changed as necessary.

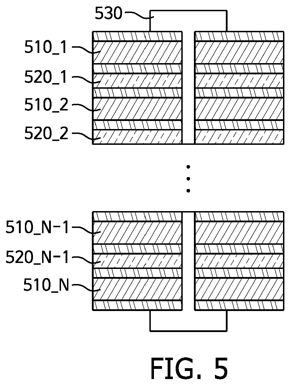

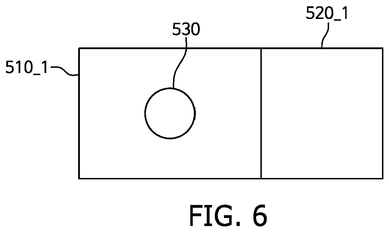

FIG. 5 shows a fixing member 530 joined to a plurality of non-coated portions and a plurality of conductors according to an embodiment of the present disclosure in a cross-sectional view. FIG. 6 is a plan view of the fixing member 530 joined to the plurality of non-coated portions and the plurality of conductors according to an embodiment of the present disclosure. In an embodiment of the present disclosure, one or more fixing members 530 may be joined to a plurality of non-coated portions 510_1 to 510_N and a plurality of conductors 520_1 to 520_N-1. In some embodiments, the plurality of non-coated portions 510_1 to 510_N may include a composite substrate, and the plurality of non-coated portions 510_1 to 510_N and the plurality of conductors 520_1 to 520_N-1 may be arranged or disposed referring to FIG. 3.

In an embodiment, the fixing member 530 may be in contact with at least a portion of the plurality of conductors 520_1 to 520_N-1. In some embodiments, the fixing member 530 may penetrate the plurality of non-coated portions 510_1 to 510_N and the plurality of conductors 520_1 to 520_N-1. For example, the fixing member 530 may be a rivet but is not limited to it. In some embodiments, the fixing member 530 may be made from a conductive material. In this embodiment, the plurality of non-coated portions 510_1 to 510_N and the plurality of conductors 520_1 to 520_N-1 may be electrically connected to each other and fixed (e.g., firmly fixed) by the fixing member 530. In some embodiments, the respective one ends of the plurality of conductors 520_1 to 520_N-1 are fixed to the plurality of non-coated portions 510_1 to 510_N, and the respective other ends of the plurality of conductors 520_1 to 520_N-1 are extended outward from the plurality of non-coated portions 510_1 to 510_N and coupled (e.g., stably coupled) to the lead tab.

FIG. 5 and FIG. 6 show one fixing member 530, but the embodiment is not limited to this, and a plurality of fixing members 530 may be used to conductively connect and mechanically fix the plurality of non-coated portions 510_1 to 510_N and the plurality of conductors 520_1 to 520_N-1. In some embodiments, in FIG. 5 and FIG. 6, the plurality of non-coated portions 510_1 to 510_N and the plurality of conductors 520_1 to 520_N-1 are arranged in the manner illustrated in FIG. 3, but are not limited to this, and a fixing member may be applied similarly when arranged in the manner illustrated in FIG. 4.

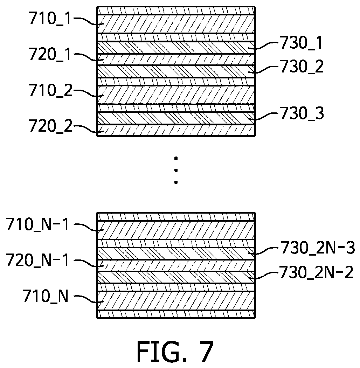

FIG. 7 is a diagram of a plurality of fixing members 730_1 to 730_2N-2 joined to a plurality of non-coated portions 710_1 to 710_N and a plurality of conductors 720_1 to 720_N-1. In some embodiments, the plurality of non-coated portions 710_1 to 710_N may include a composite substrate, and the plurality of non-coated portions 710_1 to 710_N and the plurality of conductors 720_1 to 720_N-1 may be arranged or disposed referring to FIG. 3.

In an embodiment, the fixing members 730_1 to 730_2N-2 may be in contact with at least a portion of the plurality of conductors 720_1 to 720_N-1. In an embodiment, the fixing members 730_1 to 730_2N-2 may be arranged or disposed between the plurality of non-coated portions 710_1 to 710_N and the plurality of conductors 720_1 to 720_N-1. In this embodiment, the fixing members 730_1 to 730_2N-2 may include an adhesive. For example, the fixing members 730_1 to 730_2N-2 may be, but are not limited to, adhesive tapes, materials coated with adhesive material, e.g. spray, etc. In some embodiments, the fixing members 730_1 to 730_2N-2 may be made from a conductive material. In this embodiment, the plurality of non-coated portions 710_1 to 710_N and the plurality of conductors 720_1 to 720_N-1 may be electrically connected to each other and fixed (e.g., firmly fixed) by using the fixing members 730_1 to 730_2N-2. In some embodiments, the respective one ends of the plurality of conductors 720_1 to 720_N-1 are fixed to the plurality of non-coated portions 710_1 to 710_N, and the respective other ends of the plurality of conductors 720_1 to 720_N-1 are extended outward from the plurality of non-coated portions 710_1 to 710_N and coupled (e.g., stably coupled) to the lead tab. Alternatively, the at least one fixing member 530 of figures 5 and 6 may comprise an adhesive, e.g. to pre-mount the at least one fixing member, for example to fix the rivet to the stack before using a riveting tool. As a further alternative, the fixing member 530 of figures 5 and 6 may be used in addition to the fixing members 730_1 to 730_2N-2.

In FIG. 7, the plurality of non-coated portions 710_1 to 710_N and the plurality of conductors 720_1 to 720_N-1 are arranged in the manner illustrated in FIG. 3, but are not limited to this, and a fixing member may be applied similarly when arranged in the manner illustrated in FIG. 5. In addition, FIG. 7 shows that the fixing members 730_1 to 730_2N-2, such as adhesive tapes or materials coated with adhesive material, e.g. spray, arranged or disposed between the plurality of non-coated portions 710_1 to 710_N and the plurality of conductors 720_1 to 720_N-1 are joined, but is not limited to this, and fixing members, such as the rivets illustrated in FIG. 5, penetrating the plurality of non-coated portions 710_1 to 710_N and the plurality of conductors 720_1 to 720_N-1 may be joined.

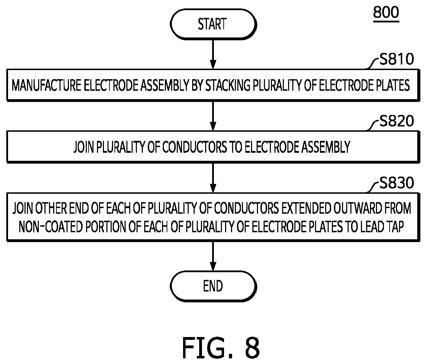

FIG. 8 is a flowchart of an example of a method 800 for manufacturing a secondary battery according to an embodiment of the present disclosure. In an embodiment of the present disclosure, the method 800 for manufacturing a secondary battery may be initiated by manufacturing an electrode assembly by stacking a plurality of electrode plates S810. In some embodiments, one or more (e.g., each) of the plurality of electrode plates may include a mixed portion in which an active material is applied to both sides of the composite substrate, and a non-coated portion in which no active material is applied to the composite substrate. In some embodiments, the composite substrate may include a polymer substrate and a first metal layer and a second metal layer arranged or disposed on both sides of the polymer substrate. In some embodiments, the first metal layer and the second metal layer may be made from the same material.

Thereafter, a plurality of conductors may be joined to the electrode assembly S820. In some embodiments, one end of one or more (e.g., each) of the plurality of conductors may be arranged or disposed between two adjacent non-coated portions of the plurality of electrode plates.

Thereafter, the other end of one or more (e.g., each) of the plurality of conductors extended outward from the non-coated portion of one or more (e.g., each) of the plurality of electrode plates may be joined to the lead tab S830. In some embodiments, the respective other ends of the plurality of conductors may be collected. In some embodiments, the boundaries of the respective other ends of the plurality of conductors may be cut to match each other. The cut other end of one or more (e.g., each) of the plurality of conductors may be joined to the lead tab by using welding or the like and electrically joined.

In an embodiment, the non-coated portions of the plurality of electrode plates and a plurality of conductors may be fixed by using at least one fixing member. In some embodiments, at least one fixing member may be made from a conductive material. In some embodiments, at least one fixing member may be in contact with at least a portion of the plurality of conductors.

In an embodiment, at least one fixing member may be arranged or disposed between the respective non-coated portions of the plurality of electrode plates and the plurality of conductors. In some embodiments, at least one fixing member may include adhesive. For example, at least one fixing member may be a conductive adhesive tape, a conductive spray, but is not limited to it.

In an embodiment, at least one fixing member may penetrate the respective non-coated portions of the plurality of electrode plates and the plurality of conductors. For example, at least one fixing member may be a rivet but is not limited to it.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

### DESCRIPTION OF SOME REFERENCE SYMBOLS

100: Secondary battery
110: Case
112: Positive electrode terminal
114: Negative electrode terminal
120: Cap assembly
122: Cap plate
124: Sealed stopper
126: Vent part
128: Notch
210: Composite substrate
212: Polymer substrate
214: Metal layers
220: Active material
310_1: First non-coated portion
310_2: Second non-coated portion
320_1: First conductor
320_N-1: N-1-th conductor
330: Lead tab
410_1: First non-coated portion
410_2: Second non-coated portion
410_N: N-th non-coated portion
420_1: First conductor
420_2: Second conductor
420_N: Conductor
430: Lead tab
510_1: Non-coated portions
520_1: Conductors
530: Fixing member
710_1: Non-coated portions
720_1: Conductors
730_1: Fixing members
800: Method
S810: Stack plurality of electrode plates to manufacture electrode assembly
S820: Join conductors to electrode assembly
S830: Join other end of conductors to lead tap

## Claims

1. A secondary battery (100) comprising:
an electrode assembly including a plurality of electrode plates; and
a plurality of conductors (320, 420, 520, 720) joined to the electrode assembly, wherein, each of the plurality of electrode plates includes a portion with an active material (220) on both sides of a composite substrate (210), and a non-coated portion (310, 410, 510, 710) free of the active material (220), and
wherein, one end of each of the plurality of conductors (320, 420, 520, 720) is arranged between two adjacent non-coated portions (310, 410, 510, 710) of the plurality of electrode plates.

2. The secondary battery (100) according to claim 1, wherein
the composite substrate (210) includes
a polymer substrate (212), and
a first metal layer (214) and a second metal layer (214) arranged on both sides of the polymer substrate (212), and
the first metal layer (214) and the second metal layer (214) are made from a same material.

3. The secondary battery (100) according to claim 1 or 2, further comprising:
at least one fixing member (530, 730) that fixes the respective non-coated portions (510, 710) of the plurality of electrode plates and the plurality of conductors (520, 720).

4. The secondary battery (100) according to claim 3, wherein
the at least one fixing member (530, 730) is in contact with at least a portion of the plurality of conductors (520, 720).

5. The secondary battery (100) according to claim 3 or 4, wherein
the at least one fixing member (730) is arranged between the respective non-coated portions (710) of the plurality of electrode plates and the plurality of conductors (720).

6. The secondary battery (100) according to any of claims 3 to 5, wherein
the at least one fixing member (530, 730) is made from a conductive material.

7. The secondary battery (100) according to any of claims 3 to 6, wherein
the at least one fixing member (730) includes an adhesive.

8. The secondary battery (100) according to any of claims 3 to 7, wherein
the at least one fixing member (530) is configured to penetrate the non-coated portions (510) of respectively the plurality of electrode plates and the plurality of conductors (520).

9. The secondary battery (100) according to any of claims 3 to 8, wherein
the at least one fixing member (530) is a rivet.

10. The secondary battery (100) according to any of claims 1 to 9, wherein
a second end of each of the plurality of conductors (320, 420, 520, 720) extends outward from the non-coated portion (310, 410, 510, 710) of each of the plurality of electrode plates.

11. The secondary battery (100) according to claim 10, wherein
the second end of each of the plurality of conductors (320, 420) is joined to a lead tab (330, 430).

12. A method (800) for manufacturing a secondary battery (100), comprising:
manufacturing (S810) an electrode assembly by stacking a plurality of electrode plates; and
joining (S820) a plurality of conductors (320, 420, 520, 720) to the electrode assembly,
wherein, each of the plurality of electrode plates includes:
a portion in which an active material (220) is applied to both sides of a composite substrate (210); and
a non-coated portion (310, 410, 510, 710) free of the active material (220),
wherein one end of each of the plurality of conductors (320, 420, 520, 720) is arranged between two adjacent non-coated portions (310, 410, 510, 710) of the plurality of electrode plates.

13. The method (800) for manufacturing a secondary battery (100) according to claim 12, wherein
the composite substrate (210) includes
a polymer substrate (212), and
a first metal layer (214) and a second metal layer (214) arranged on both sides of the polymer substrate (212), and
the first metal layer (214) and the second metal layer (214) are made from a same material.

14. The method (800) for manufacturing (S820) a secondary battery (100) according to claim 12 or 13, wherein the joining includes
fixing the non-coated portions (510, 710) of respectively the plurality of electrode plates and the plurality of conductors (520, 720) by using at least one fixing member (530, 730).

15. The method (800) for manufacturing a secondary battery (100) according to claim 14, wherein
the at least one fixing member (730) is arranged between the respective non-coated portions (710) of the plurality of electrode plates and the plurality of conductors (720).
